# EUROPEAN PATENT APPLICATION

(11) **EP 3 480 418 A1**
(43) Date of publication of application: **08.05.2019**
(21) Application number: 18204929.6
(22) Date of filing: 07.11.2018
(51) Int. Cl.: E06C 1/18, E06C 7/06

(54) **MECHANICAL STRUCTURE**

(30) Priority: 07.11.2017 CN 201721472774 U; 13.02.2018 CN 201820258435 U
(71) Applicant: Chen, Wan Yu, 241 New Taipei City (TW)
(72) Inventor: Chen, Wan Yu, 241 New Taipei City (TW)
(74) Representative: Casalonga

(57) **Abstract**

The present disclosure provides a mechanical structure, including a first portion, a second portion, the second portion including a first fixture, and a second fixture over the first fixture, a first connector, the first connector including a first end connected to the first portion, and a second end connected to the second portion, wherein the second end is connected to the first fixture when a first angle is between the first portion and the second portion, and the second end is connected to the second fixture when a second angle different from the first angle is between the first portion and the second portion.

## Description

### BACKGROUND

When a user has intention to reach an elevated position, a mechanical structure, such as a supporter, a ladder, or the like, may provide an elevated standpoint and bear the weight of the user on such standpoint. In order to ameliorate safety and/or efficiency of using a mechanical structure as an elevated standpoint, an improved mechanical structure is entailed.

### BRIEF DESCRIPTION OF THE DRAWINGS

Aspects of the present disclosure are best understood from the following detailed description when read with the accompanying figures. It is noted that, in accordance with the standard practice in the industry, various features are not drawn to scale. In fact, the dimensions of the various features may be arbitrarily increased or reduced for clarity of discussion.
FIG. 1 is a perspective view showing a mechanical structure, in accordance with some embodiments of the present disclosure.
FIG. 2 is an enlarged schematic view showing a top portion of a mechanical structure, in accordance with some embodiments of the present disclosure.
FIG. 3A is a perspective view showing a connector, in accordance with some embodiments of the present disclosure.
FIG. 3B is an exploded view of a connector, in accordance with some embodiments of the present disclosure.
FIG. 3C is an exploded view of a connector, in accordance with some embodiments of the present disclosure.
FIG. 4 is a side view showing a mechanical structure under a first state, in accordance with some embodiments of the present disclosure.
FIG. 5A is a side view showing a mechanical structure under a second state, in accordance with some embodiments of the present disclosure.
FIG. 5B is a top view showing a mechanical structure under a second state, in accordance with some embodiments of the present disclosure.
FIG. 6A is a perspective view of a top portion of a mechanical structure, in accordance with some embodiments of the present disclosure.
FIG. 6B is a perspective view of a top portion of a mechanical structure, in accordance with some embodiments of the present disclosure.
FIG. 6C is an exploded view of a top portion of a mechanical structure, in accordance with some embodiments of the present disclosure.
FIG. 6D is an exploded view of a top portion of a mechanical structure, in accordance with some embodiments of the present disclosure.
FIG. 7A is a perspective view of a first portion of a mechanical structure, in accordance with some embodiments of the present disclosure.
FIG. 7B is a perspective view showing a mechanical structure, in accordance with some embodiments of the present disclosure.
FIG. 7C is an enlarged schematic view of a first portion of a mechanical structure, in accordance with some embodiments of the present disclosure.
FIG. 7D is a cross-sectional view of a first portion of a mechanical structure, in accordance with some embodiments of the present disclosure.
FIG. 7E is a perspective view of a first portion of a mechanical structure, in accordance with some embodiments of the present disclosure.
FIG. 7F is a cross-sectional view of a first portion of a mechanical structure, in accordance with some embodiments of the present disclosure.
FIG. 7G is a cross-sectional view of a strip, in accordance with some embodiments of the present disclosure.
FIG. 7H is a cross-sectional view of a first portion of a mechanical structure, in accordance with some embodiments of the present disclosure.
FIG. 7I is a cross-sectional view of a strip, in accordance with some embodiments of the present disclosure.
FIG. 8 is an enlarged schematic view showing a top portion of a mechanical structure, in accordance with some embodiments of the present disclosure.
FIG. 9 is an enlarged schematic view showing a top portion of a mechanical structure, in accordance with some embodiments of the present disclosure.

### DETAILED DESCRIPTION

The following disclosure provides many different embodiments, or examples, for implementing different features of the provided subject matter. Specific examples of components and arrangements are described below to simplify the present disclosure. These are, of course, merely examples and are not intended to be limiting. For example, the formation of a first feature over or on a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed.

Further, spatially relative terms, such as "beneath," "below," "lower," "above," "upper" and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. The apparatus may be otherwise oriented (rotated 90 degrees or at other orientations) and the spatially relative descriptors used herein may likewise be interpreted accordingly.

Notwithstanding that the numerical ranges and parameters setting forth the broad scope of the disclosure are approximations, the numerical values set forth in the specific examples are reported as precisely as possible. Any numerical value, however, inherently contains certain errors necessarily resulting from the standard deviation found in the respective testing measurements. Also, as used herein, the terms "substantially," "approximately," or "about" generally means within a value or range which can be contemplated by people having ordinary skill in the art. Alternatively, the terms "substantially," "approximately," or "about" means within an acceptable standard error of the mean when considered by one of ordinary skill in the art. People having ordinary skill in the art can understand that the acceptable standard error may vary according to different technologies. Other than in the operating/working examples, or unless otherwise expressly specified, all of the numerical ranges, amounts, values and percentages such as those for quantities of materials, durations of times, temperatures, operating conditions, ratios of amounts, and the likes thereof disclosed herein should be understood as modified in all instances by the terms "substantially," "approximately," or "about." Accordingly, unless indicated to the contrary, the numerical parameters set forth in the present disclosure and attached claims are approximations that can vary as desired. At the very least, each numerical parameter should at least be construed in light of the number of reported significant digits and by applying ordinary rounding techniques. Ranges can be expressed herein as from one endpoint to another endpoint or between two endpoints. All ranges disclosed herein are inclusive of the endpoints, unless specified otherwise.

Conventionally, a mechanical structure may be restricted by the construction of a connector of the structure, thus cannot be spread to a greater angle, e.g. substantially spread to 180 degrees. Therefore, the convenience of the mechanical structure is limited by virtue of the utility of the mechanical structure in various environments or workplace.

In some other conventional mechanical structures, the mechanical structure may be spread to an obtuse angle; however, such conventional mechanical structures may be unstable, lack of protection, or prone to be damaged, thus exposing the user in the risk of falling or flipping, and further inducing casualties, or properties loss. In addition, such conventional mechanical structures may be hard to be operated, thence deteriorating time efficiency. The present disclosure provides an improved mechanical structure to ameliorate safety, improve efficiency, and sustain reliability.

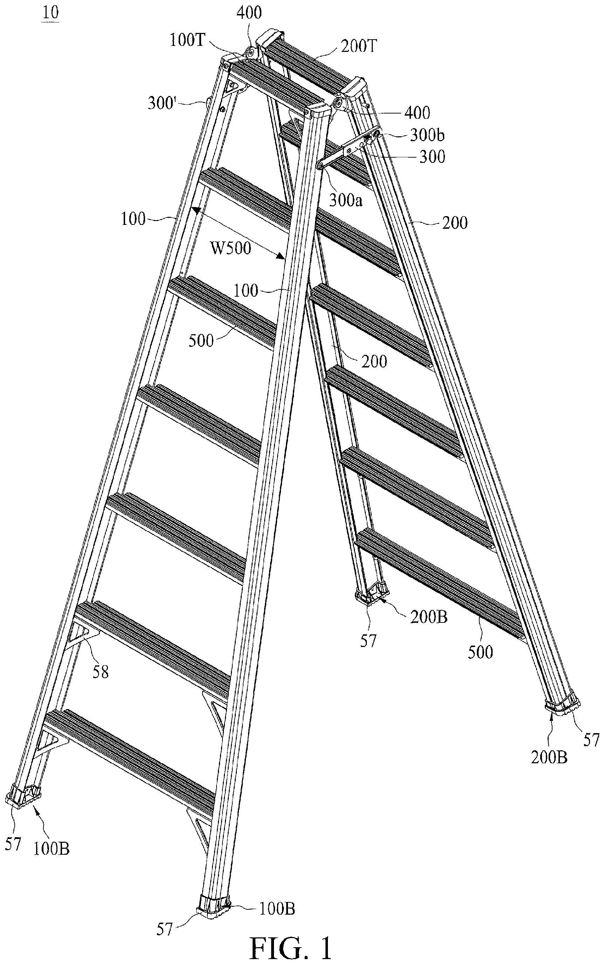

Referring to **FIG. 1**, **FIG. 1** is a perspective view showing a mechanical structure, in accordance with some embodiments of the present disclosure. A mechanical structure **10** may include a first portion **100**, a second portion **200,** and a first connector **300**. The first portion **100** and the second portion **200** may be made by a material having an adequate mechanical strength to bear a weight of human, such as metal, steel, stainless steel, aluminum, metal alloy, or other suitable materials. At least one of the first portion **100** and the second portion **200** has a connecting board **500**, wherein a width **W500** of the connecting board **500** may be at least greater than a width of a human foot, e.g. 3cm, so that the connecting board 500 can serve as a standpoint for a user and thereby support the user. In some embodiments, a strengthening structure **58** for improving the strength of the connecting board **500** is connected between the connecting board **500** and the first portion **100**, and/or connected between the connecting board **500** and the second portion **200**. The strengthening structure **58** may be a structure similar to triangle shape, a hollowed triangle shape, polygon shape, or the like. The first portion **100** has a top surface **100T** and the second portion **200** has a top surface **200T**. In some embodiments, the first portion **100** has a shape tapering toward the top surface **100T**, and the second portion **200** has a shape tapering toward the top surface **200T**.

The first connector **300** has a first end **300a** connected to the first portion **100**, and a second end **300b** connected to the second portion **200**. The mechanical structure **10** may optionally include a second connector **300'** having a first end (not shown in **FIG**. **1**) connected to the first portion **100**, and a second end (not shown in **FIG. 1**) connected to the second portion **200**. In some embodiments, the structure of the second connector **300'** is similar to the first connector **300,** but is disposed on the opposite side of the mechanical structure **10**, as the first connector **300** and the second connector **300'** are facing away from each other. For the purpose of conciseness, besides being disposed in substantially symmetrical or opposite fashion in some embodiments, the features of the second connector **300'** can be similar to the first connector **300** thereof, as duplicated explanations are omitted.

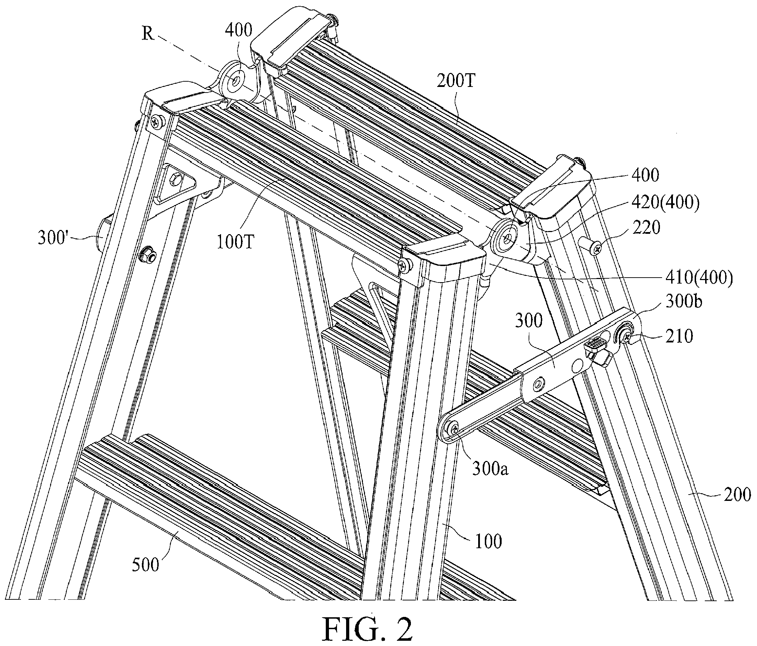

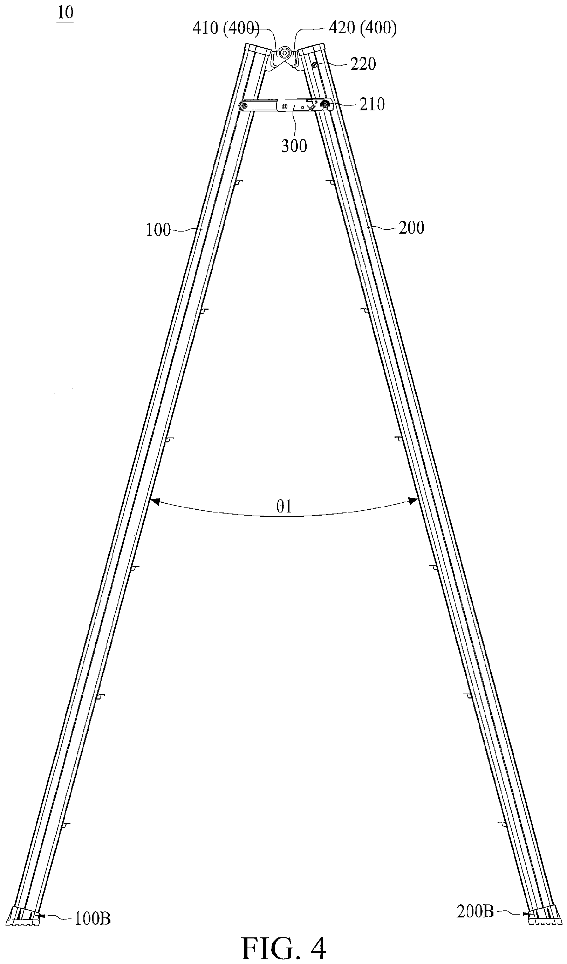

In some embodiments, the mechanical structure 10 further include a hinge 400 connected between the first portion **100** and the second portion **200**, as the details of the hinge **400** will be subsequently discussed in **FIG. 4** to **FIG. 6B**. A first portion **410** of the hinge **400** is connected to the first portion **100** of the mechanical structure **10** and a second portion **420** of the hinge **400** is connected to the second portion **200** of the mechanical structure **10**. The hinge **400** allows the first portion **100** and/or the second portion **200** to relatively rotates around a rotational axis **R** (as shown in **FIG. 2**), as an end **100B** of the first portion **100** distal to the top surface **100T** can move toward or move away from an end **200B** of the second portion **200** distal to the top surface **200T**. In some embodiments, the mechanical structure **10** may include two or more hinges **400**, each on one side of the top portion of the mechanical structure **10**, to facilitate the smoothness and the stability of the rotation thereof.

In some embodiments, the mechanical structure **10** further include a pad **57** covering a bottom surface of the first portion **100** and/or a bottom surface of the second portion **200**. The pad **57** may be materials with higher friction coefficient, such as plastic, rubber, polymer, or other suitable compositions. The pad **57** prevents the mechanical structure **10** from easily flipping over or gliding, thus reduces the risk of inducing injuries.

Referring to **FIG. 2**, **FIG. 2** is an enlarged schematic view showing a top portion of a mechanical structure, in accordance with some embodiments of the present disclosure. The mechanical structure **10** further include a first fixture **210** and a second fixture **220** disposed on the second portion **200**, wherein the second fixture **220** is over the first fixture **210**. The second end **300b** of the first connector **300** can be fixated to the first fixture **210** or the second fixture **220**. In some embodiments, a third fixture (not shown in **FIG. 2**) and a fourth fixture (not shown in **FIG. 2**) over the third fixture is disposed on the same side of the second connector **300'**, as the second end of the second connector **300'** can be connected to the second portion **200** through the third fixture or the fourth fixture.

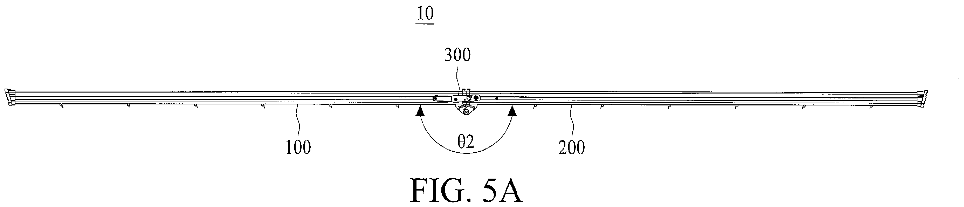

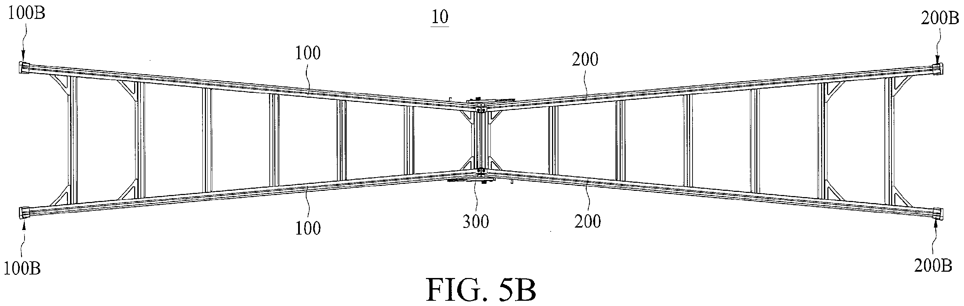

Referring to **FIG. 3A**, **FIG. 4**, **FIG. 5A** and **FIG. 5B**, **FIG. 3A** is a perspective view showing a connector, **FIG. 4** is a side view showing a mechanical structure under a first state, in accordance with some embodiments of the present disclosure, **FIG. 5A** is a side view showing a mechanical structure under a second state, in accordance with some embodiments of the present disclosure, **FIG. 5B** is a top view showing a mechanical structure under a second state, in accordance with some embodiments of the present disclosure. The first connector **300** may include an operative portion **326** to control the first connector **300** to be fixated to the first fixture **210** or second fixture **220**, or unfixed from the first fixture **210** or second fixture **220**. The operative portion **326** may be between the first end **300a** and the second end **300b**.

When the first connector **300** is fixated to the first fixture **210**, as shown in **FIG. 4**, a first angle **θ**₁ is between the first portion **100** and the second portion **200**, as such position is denoted as a first state. And by operating the operative portion **326** to unfix the first connector **300** from the first fixture **210**, the first portion **100** and the second portion **200** can thereby rotate around the rotational axis **R** (shown in **FIG. 2**). The first connector **300** can be fixated to the second fixture **220**, as shown in **FIG. 5A** and **FIG. 5B**, thus a second angle **θ**₂ different from the first angle **θ**₁ is between the first portion **100** and the second portion **200**, herein such position can be denoted as a second state. In some embodiments, the second angle **θ**₂ is greater than the first angle **θ**₁. In some embodiments, the first angle **θ**₁ is an acute angle and the second angle **θ**₂ is an obtuse angle. In some embodiments, the second angle **θ**₂ is identical to 180 degrees or substantially identical to 180 degrees, within an acceptable tolerance. The first connector **300** can be unfixed from the second fixture **220** and fixated to the first fixture **210**, as an angle between the first portion **100** and the second portion **200** changes from the second angle **θ**₂ to the first angle **θ₁**.

As shown in **FIG. 2** and **FIG. 5B**, it is noteworthy that the top surface **100T** and the top surface **200T** does not interfere each other during the process of the mechanical structure **10** transferring between the first state and the second state.

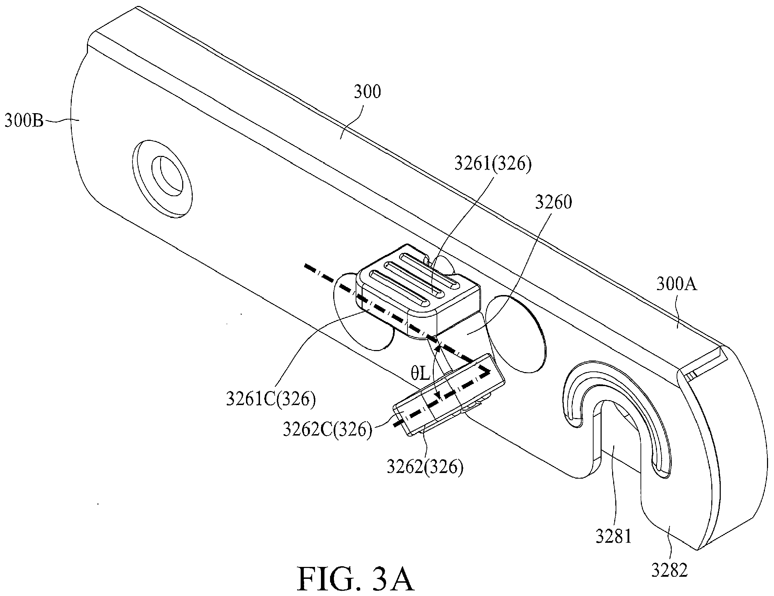

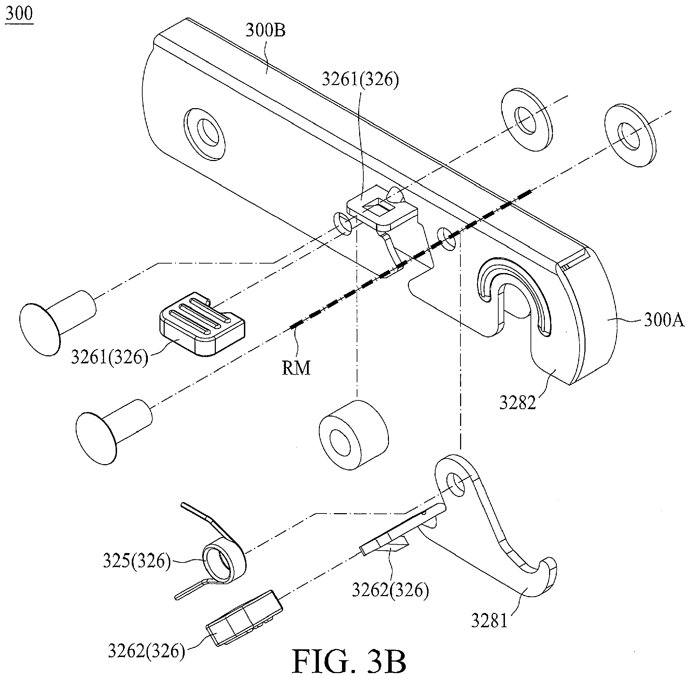

Referring to **FIG. 3A** and **FIG. 3B**, **FIG. 3B** is an exploded view of a connector, in accordance with some embodiments of the present disclosure. In some embodiments, the operative portion **326** at least includes a first lever **3261** and a second lever **3262**. The operative portion **326** may further include an elastic member **325** connected between the first lever **3261** and the second lever **3262**. In some embodiments, the first lever **3261** is fixed on the first connector **300** and the second lever **3262** is rotatably connected to the first connector **300,** so that the second lever can rotate along an axis **RM.** When a leverage angle **θ_{L}** between the first lever **3261** and the second lever **3262** is reduced by external force applied on the first lever **3261** and/or the second lever **3262**, i.e. from a first leverage angle to a second leverage angle less than the first leverage angle, the elastic member **325** allows a distance between the first lever **3261** and the second lever **3262** to reduce, and stores elastic potential energy thereof. In some embodiments, the elastic member **325** can be a torsion spring, a coil, a spring, a hinge, or other suitable structures which can store potential energy. An aperture **3260** is disposed between the first lever **3261** and the second lever **3262** to allow the leverage angle **θ_{L}** between the first lever **3261** and the second lever **3262** to be smoothly changed within a predetermined range.

When the external force applied on the first lever **3261** and/or the second lever **3262** is substantially reduced or removed therefrom, the elastic member **325** provides a torque and/or a force to increase the leverage angle **θ_{L}** between the first lever **3261** and the second lever **3262**, i.e. from the second leverage angle to the first leverage angle, which is greater than the second leverage angle. In some embodiments, the first leverage angle and the second leverage angle are acute angles, so that the operative portion **326** can be operated easily by virtue of applying force thereon. In some embodiments, for the purpose of improving safety, a sleeve **3261C** and a sleeve **3262C** may at least cover a portion of the first lever **3261** and the second lever **3262** respectively so that a user can apply force on a mild surface, wherein a sharp edge, burr, metal edge, or rough surface can be covered by the sleeve **3261C** and the sleeve **3262C**, thus incise injury can be avoided.

The sleeve **3261C** and the sleeve **3262C** may include plastic, polymer, rubber, organic substances, or the like. In some embodiments, the first lever **3261** and the second lever **3262** may include a mating engagement structure, such as protrusions and recesses, to ameliorate adhesion between the sleeve **3261C** and the sleeve **3262C**, respectively.

The first connector **300** may further include a clip **3281** connected to the second lever **3262** and a mating part **3282**. The clip **3281** may move in accordance with the second lever **3262**, or alternately stated, movement of the clip **3281** may be controlled by the operative portion **326**. In some embodiments, the clip and the second lever **3262** are manufactured as an integrated piece. In some embodiments, the clip **3281** has a curved shape, such as hook shape. The clip **3281** can fixate the first connector **300** to the first fixture **210** or the second fixture **220**.

When the leverage angle **θ_{L}** between the first lever **3261** and the second lever **3262** is at the first leverage angle, the clip **3281** may secure the first fixture **210** or the second fixture **220** by applying a force thereon against the mating part **3282**, wherein the force can be provided by the elastic member **325**, so that the first connector **300** may not be unfixed from the first fixture **210** or the second fixture **220** without utilizing the operative portion **326**. Thereby the mechanical structure **10** may not accidently folded or moved in an undesired fashion. In some embodiments, the mating part **3282** may have a recess to accommodate at least a portion of the clip **3281** to further improve secureness. Referring to **FIG. 4**, with the first portion **100** and the first fixture **210** of the second portion **200** being connected by the first connector **300**, the mechanical structure **10** may stand on the end **100B** and the end **200B** in first state. While referring to **FIG. 5B**, with the first portion **100** and the second fixture **220** of the second portion **200** being connected by the first connector **300**, one of the end **100B** and the end **200B** supports the mechanical structure **10** to stand in second state, with another one in contact with another surface, such as a wall or a vertical surface.

Referring back to **FIG. 3A** and **FIG. 3B**, When the leverage angle **θ_{L}** between the first lever **3261** and the second lever **3262** is increased to an angle greater than the first leverage angle (e.g. second leverage angle), the clip **3281** moves away from the mating part **3282** thus the first connector **300** can be unfixed and disconnected from the first fixture **210** or the second fixture **220**, and the first portion **100** and the second portion **200** can thereby be rotated around the rotational axis **R.**

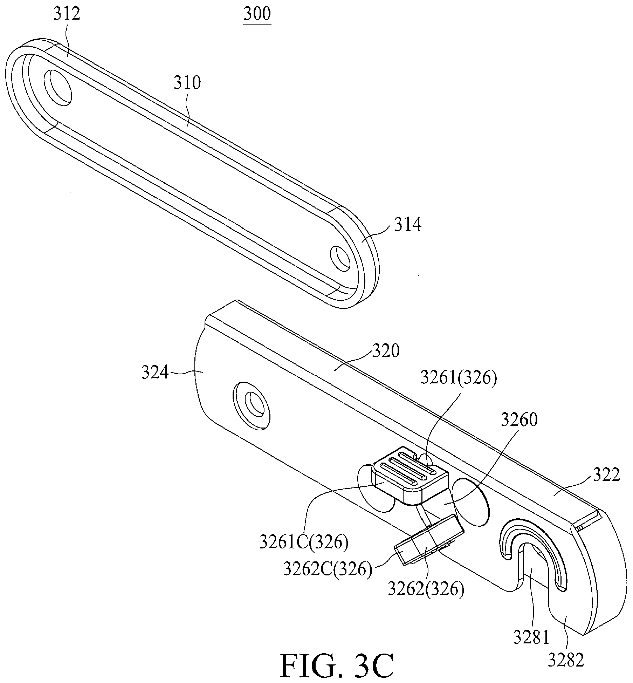

Referring to **FIG. 3C**, **FIG. 3C** is an exploded view of a connector, in accordance with some embodiments of the present disclosure. In some embodiments, the first connector **300** includes a first link **310** and a second link **320,** wherein a first end **312** of the first link **310** is connected to the first portion **100**, and a second end **314** of the first link **310** is connected to the second link **320**. A first end **324** of the second link **320** is connected to the first link **310** and a second end **322** of the second link **320** is opposite to the first end **324** of the second link **320**. The second link **320** may include the operative portion **326**, the clip **3281,** the mating part **3282,** the elastic member **325** as aforementioned in **FIG. 3A** and **FIG. 3B**. The first link **310** may provide additional length to the first connector **300**. It is noteworthy that the second end **322** of the second link **320** can be deemed as the second end **300b** of the first connector **300**, and the first end **312** of the first link **310** can be deemed as the first end **300a** of the first connector **300**.

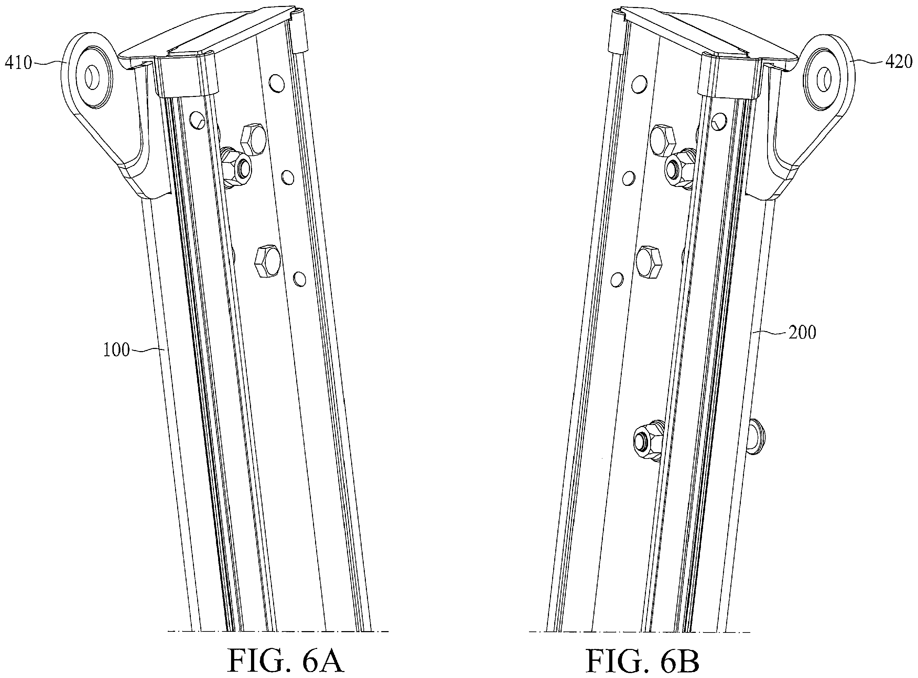

Referring to **FIG. 6A** and **FIG. 6B**, **FIG. 6A** is a perspective view of a top portion of a mechanical structure, **FIG. 6B** is a perspective view of a top portion of a mechanical structure, in accordance with some embodiments of the present disclosure. The first portion **410** of the hinge **400** is connected and fixed to the first portion **100** of the mechanical structure **10**, and the second portion **420** of the hinge **400** is connected and fixed to the second portion **200** of the mechanical structure **10**. The first portion **410** of the hinge **400** and the second portion **420** of the hinge **400** can rotate around a rotational axis **R** (shown in **FIG. 2**).

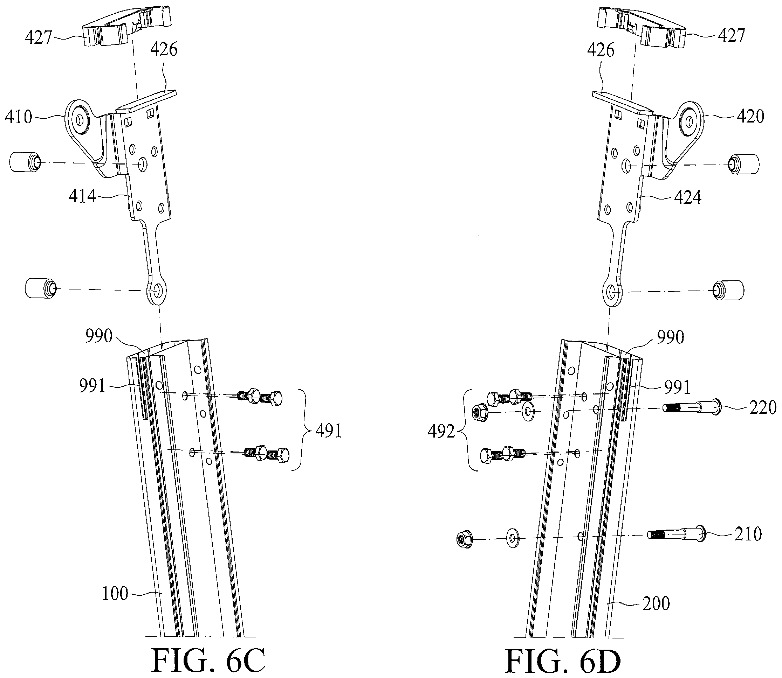

Referring to **FIG. 6C** and **FIG. 6D**, **FIG. 6C** is an exploded view of a top portion of a mechanical structure, **FIG. 6D** is an exploded view of a top portion of a mechanical structure, in accordance with some embodiments of the present disclosure. Each of the first portion **100** and the second portion **200** may include a hollowed chamber **990,** as a portion of the first portion **410** of the hinge **400** and a portion of the second portion **420** of the hinge **400** can be accommodated in the hollowed chamber **990** of the first portion **100** and the hollowed chamber **990** of the second portion **200** respectively. An extension portion **414** connected to the first portion **410** of the hinge **400** is fixated to an inner surface of the hollowed chamber **990** of the first portion **100** by a first fixing member **491**; while an extension portion **424** connected to the second portion **420** of the hinge **400** is fixated to an inner surface of the hollowed chamber **990** of the second portion **200** by a second fixing member **492**. In some embodiments, the insertion direction of the first fixing member **491** and the second fixing member **492** are opposite to the first fixture **210** for safety and aesthetical purpose since the first fixing member **491** and the second fixing member **492** may not be exposed on an outer surface of the first portion **100** and the second portion **200** which disposes the first connector **300** or the second connector **300'**. In some embodiments, the first fixing member **491** and the second fixing member **492** may include screw, nut, bolt, and/or other suitable fixtures; while the extension portion **414** and the extension portion **424** are mating members of the first fixing member **491** and the second fixing member **492**, which may include inner thread, thread, socket, or the like.

In some embodiments, each of the first portion **100** and the second portion **200** has a slot **991** so that a portion of the first portion **410** of the hinge **400** and a portion of the second portion **420** of the hinge **400** can be respectively inserted therein. The slot **991** may avoid structure interference and further improve the stability of the hinge **400** by contacting at least two sides of each of the first portion **410** of the hinge **400** and a portion of the second portion **420** of the hinge **400**.

In some embodiments, each of the extension portion **414** and the extension portion **424** has a top portion **426** to respectively contact with a top surface of the first portion **100** and a top surface of the second portion **200** directly, thus the hinge **400** can be fixated with improved stability. A cap **427** may be disposed above the extension portion **414** and the extension portion **424** to further improve stability of the hinge **400** and avoid without inducing incised injury.

In some embodiments, at least a portion of the first fixture **210** and a portion of the second fixture **220** are in the hollowed chamber **990** of the second portion **200**. The first fixture **210** and the second fixture **220** may penetrate through the second fixing member **492** to further alleviate the risk of the hinge **400** being unstable.

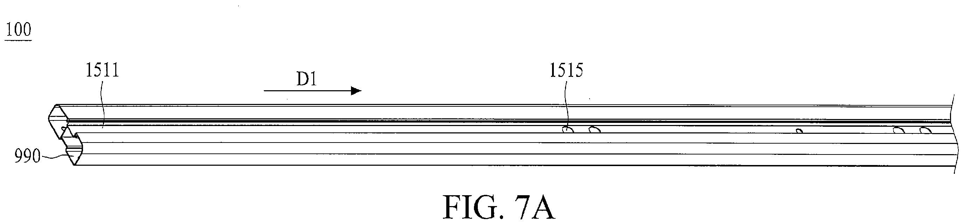

Referring to **FIG. 7A**, **FIG. 7A** is a perspective view of a first portion of a mechanical structure, in accordance with some embodiments of the present disclosure. In some embodiments, a recess **1511** is recessed on an outer surface of the first portion **100**, wherein the recess **1511** extends in a first direction **D1** along the first portion **100**. The recess **1511** may help ameliorate mechanical strength, space reduction, or cost reduction, or in some embodiments, the recess **1511** may stem from limitation during fabrication. In some embodiments, the recess **1511** may include apertures **1515** or other protrusions, recesses, or other structures. However, such structures having acute edges may cause injury on a user such as incised wound.

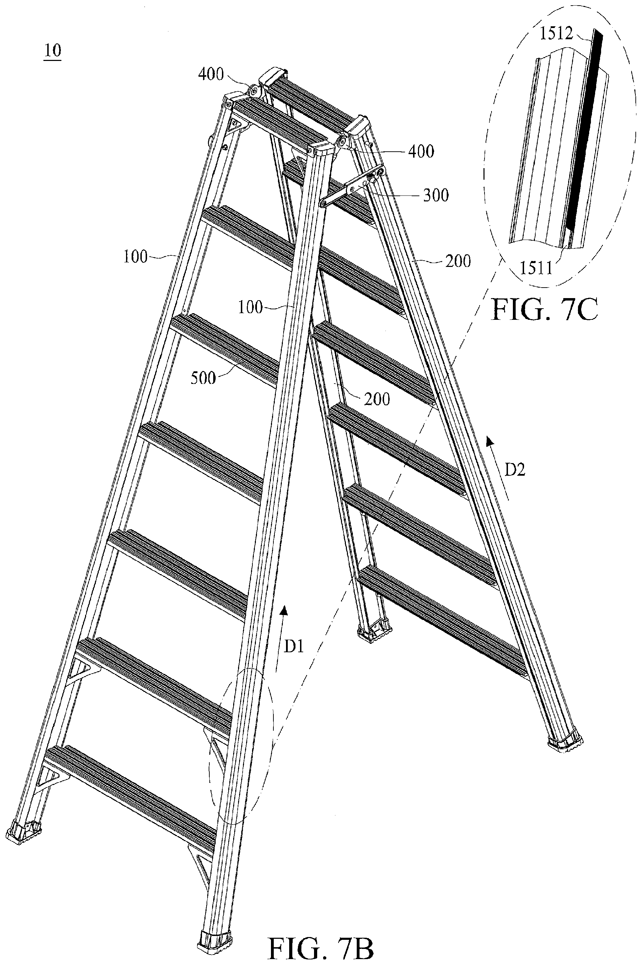

Referring to **FIG. 7B** and **FIG. 7C**, **FIG. 7B** is a perspective view showing a mechanical structure, **FIG. 7C** is an enlarged schematic view of a first portion of a mechanical structure, in accordance with some embodiments of the present disclosure. In some embodiments, the second portion **200** may also include the recess **1511** similar to the first portion **100** thereof, wherein the recess (not shown in **FIG. 7B** and **FIG. 7C**) extends along a second direction **D2** along the second portion **200**. A strip **1512** may be disposed on an outer surface of the first portion **100** and/or an outer surface of the second portion **200** in order to cover the apertures **1515** or other protrusions, recesses, or other structures. The strip **1512** may extend along the same direction of the recess **1511**.

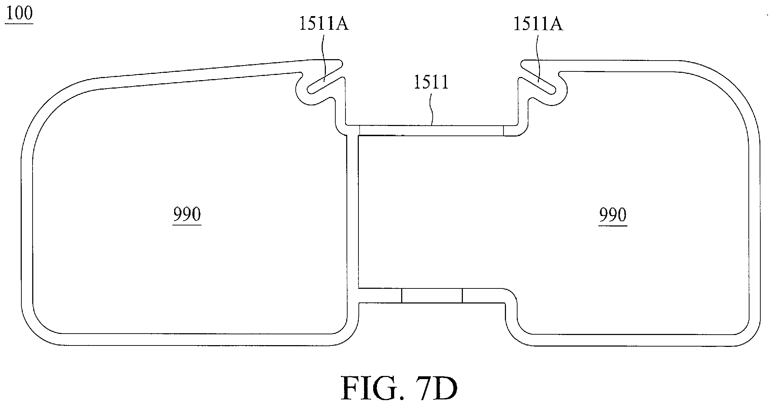

Referring to **FIG. 7D**, **FIG. 7D** is a cross-sectional view of a first portion of a mechanical structure, in accordance with some embodiments of the present disclosure. A strip slot **1511A** is disposed above the recess **1511** or on at least one sidewall of the recess **1511**. In some embodiments, the strip slot **1511A** is recessed in a direction toward the hollowed chamber **990** of the first portion **100** or the second portion **200**. The strip slot **1511A** may accommodate and engage the strip **1512** and thus prevent the strip slot **1511A** from detachment. In some embodiments, the recess **1511** may be recessed from a surface which is connected to the first connector **300** or the second connector **300'**.

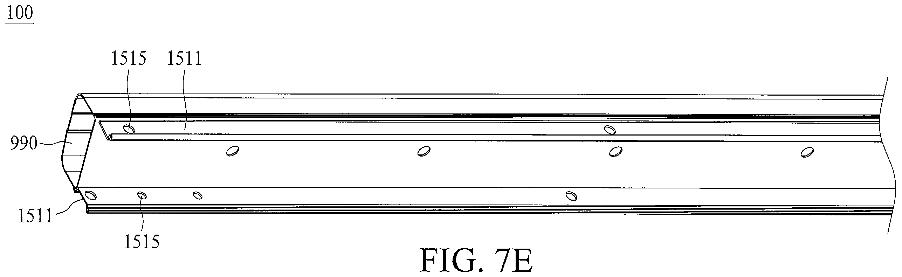

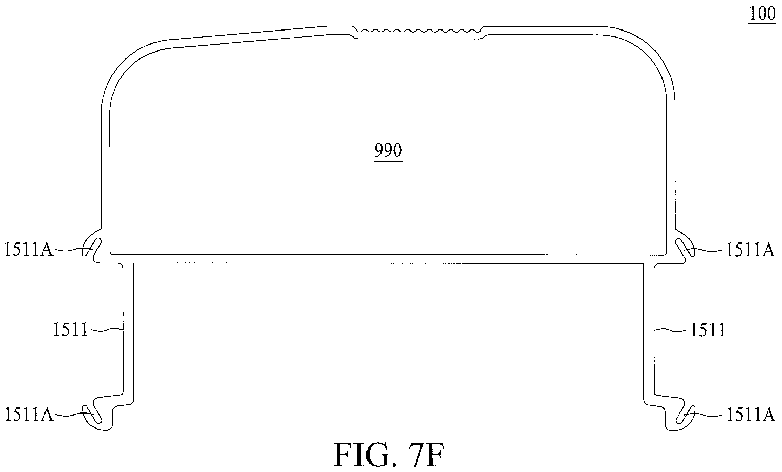

Referring to **FIG. 7E** and **FIG. 7F**, **FIG. 7E** is a perspective view of a first portion of a mechanical structure, **FIG. 7F** is a cross-sectional view of a first portion of a mechanical structure, in accordance with some embodiments of the present disclosure. In some embodiments, the recess **1511** may be disposed on an extended portion connecting to the first portion **100** or the second portion **200**, therefore the strip slot **1511A** is disposed over the recess **1511** or on at least one sidewall of the recess **1511**. The strip **1512** may extend along the same direction of the recess **1511**.

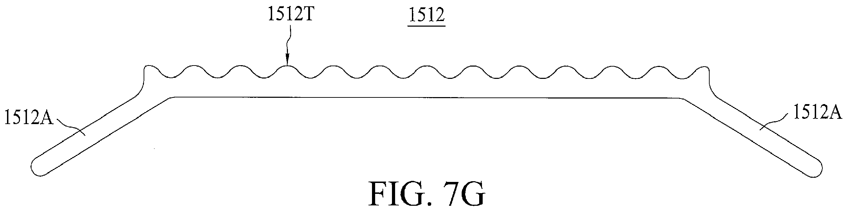

Referring to **FIG. 7G**, **FIG. 7G** is a cross-sectional view of a strip, in accordance with some embodiments of the present disclosure. In order to ameliorate the engagement between the strip **1512** and the strip slot **1511A**, the strip **1512** may include a protrusion portion **1512A** to be inserted into the strip slot **1511A**. The protrusion portion **1512A** may match with the strip slot **1511A**. In some embodiments, the strip **1512** may include an exposing top surface **1512T** having a flat surface or a curved surface, so that acute edges causing injuries may be avoided.

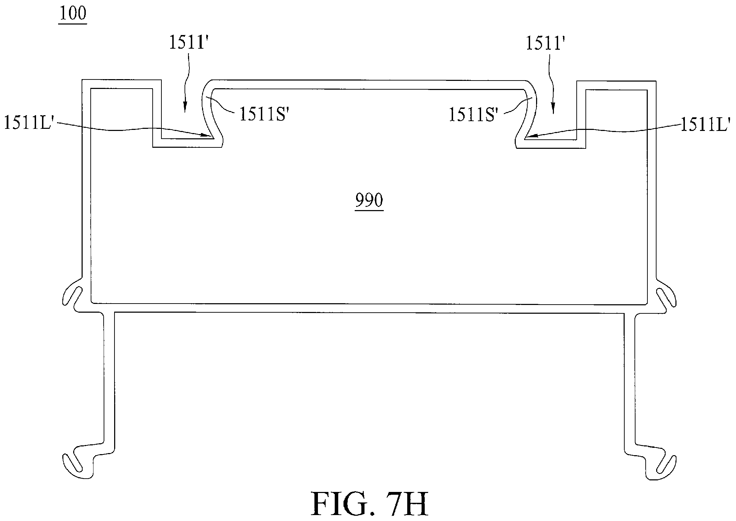

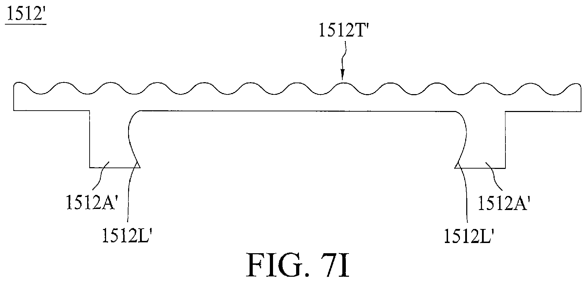

Referring to **FIG. 7H** and **FIG. 7I**, **FIG. 7H** is a cross-sectional view of a first portion of a mechanical structure, and **FIG. 7I** is a cross-sectional view of a strip, in accordance with some embodiments of the present disclosure. In some embodiments, the first portion **100** and/or the second portion **200** may include a recess **1511'** (a variation of the recess **1511** discussed in **FIG. 7D**) to accommodate a strip **1512'** (a variation of the strip **1512** discussed in **FIG. 7G**). In order to ameliorate the engagement between the strip **1512'** and the recess **1511'**, the recess **1511'** is recessed toward the hollowed chamber **990** as the recess **1511'** further includes a secondary recess **1511L'** recessed in a different direction than the recess **1511'** (e.g. substantially orthogonal to the recess **1511'**); while the strip **1512'** may include a first portion **1512A'** to be disposed toward the hollowed chamber **990** and a second portion **1512L'** to be laterally extends from the first portion **1512A'**. By such configuration, the second portion **1512L'** can mate with the secondary recess **1511L'**, as a sidewall of the recess **1511'** may have an inward protrusion **1511S'** to prevent the strip **1512'** to be detached from the recess **1511'**.

In some embodiments, the first portion **100** and/or the second portion **200** includes at least two recesses **1511'**, as the strip **1512'** includes at least two first portions **1512A'** and the same number of second portions **1512L'** to match with the recess **1511'**. In some embodiments, the strip **1512'** may include an exposing top surface **1512T'** having a flat surface or a curved surface, so that acute edges causing injuries may be avoided.

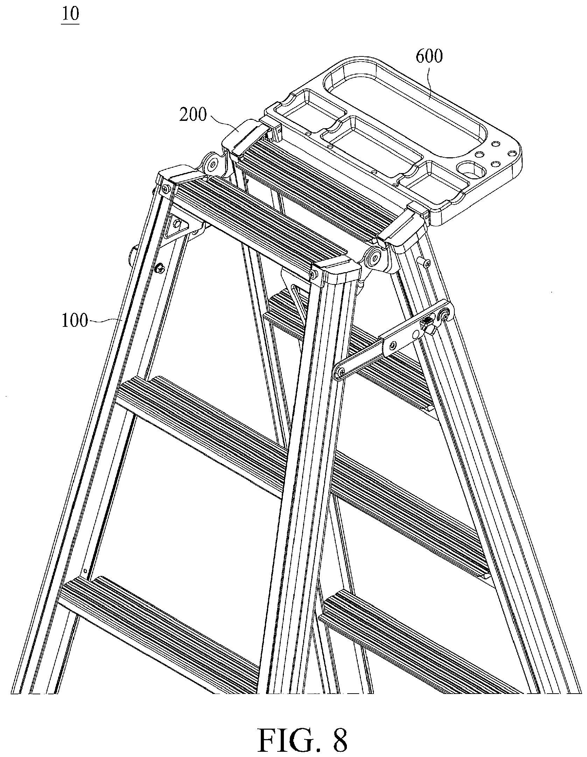

Referring to **FIG. 8**, **FIG. 8** is an enlarged schematic view showing a top portion of a mechanical structure, in accordance with some embodiments of the present disclosure. In some embodiments, a trey **600** may be optionally disposed on the first portion **100** or the second portion **200**. The trey **600** may provide extra storage, such as a platform for placing hand tools. In some embodiments, the trey **600** may include fast assembly structures for convenient attachment and detachment.

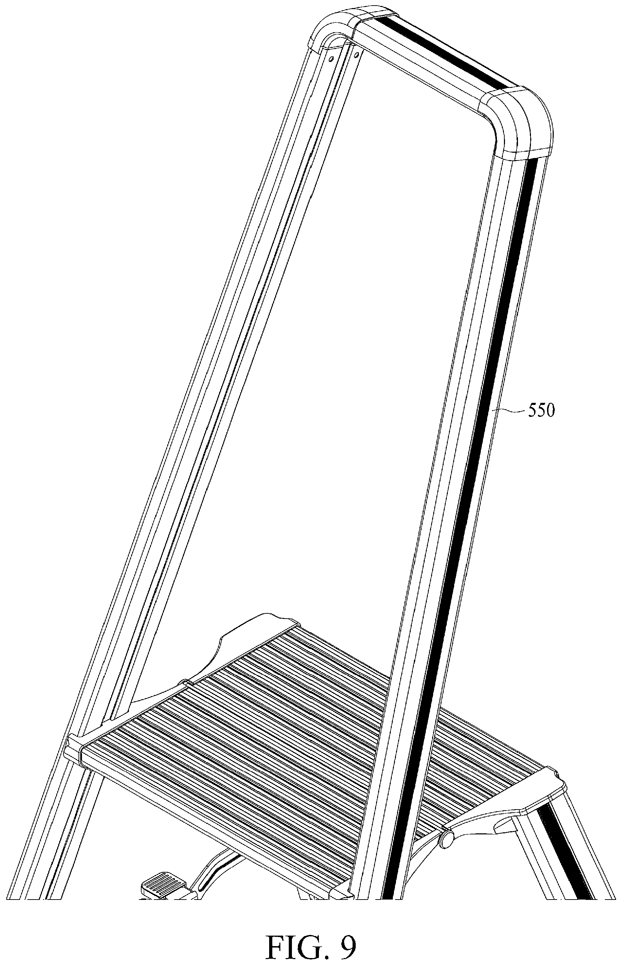

Referring to **FIG. 9**, **FIG. 9** is an enlarged schematic view showing a top portion of a mechanical structure, in accordance with some embodiments of the present disclosure. In some embodiments, an extension structure **550** may be optionally disposed above the mechanical structure **10**. The extension structure **550** may serve as a handle, or can be used for fixating a safety rope thereto.

Some embodiments of the present disclosure provide a mechanical structure, including a first portion, a second portion, the second portion including a first fixture, and a second fixture over the first fixture, a first connector, the first connector including a first end connected to the first portion, and a second end connected to the second portion, wherein the second end is connected to the first fixture when a first angle is between the first portion and the second portion, and the second end is connected to the second fixture when a second angle different from the first angle is between the first portion and the second portion.

Some embodiments of the present disclosure provide a mechanical structure, including a first portion, a second portion connected to the first portion, and a first connector connected to the first portion, the first connector including a first lever, a second lever, wherein the first lever and the second lever are connected by an elastic member, and a clip connected to the second lever.

Some embodiments of the present disclosure provide a mechanical structure, including a first portion having a first hollowed chamber, a hinge connected to the first portion, a second portion connected to the hinge, wherein the second portion has a second hollowed portion, a first connector having a first end connected to the first portion and a second end connected to the second portion, a second connector having a first end connected to the first portion and a second end connected to the second portion, a first fixing member to fixate the hinge to an inner surface of the first hollowed chamber, and a second fixing member to fixate the hinge to an inner surface of the second hollowed chamber.

The foregoing outlines features of several embodiments so that those skilled in the art may better understand the aspects of the present disclosure. Those skilled in the art should appreciate that they may readily use the present disclosure as a basis for designing or modifying other operations and structures for carrying out the same purposes and/or achieving the same advantages of the embodiments introduced herein. Those skilled in the art should also realize that such equivalent constructions do not depart from the spirit and scope of the present disclosure, and that they may make various changes, substitutions, and alterations herein without departing from the spirit and scope of the present disclosure.

Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed, that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. A mechanical structure, comprising:
a first portion;
a second portion, the second portion comprising:
a first fixture; and
a second fixture over the first fixture;
a first connector, the first connector comprising:
a first end connected to the first portion; and
a second end connected to the second portion, wherein the second end is connected to the first fixture when a first angle is between the first portion and the second portion, and the second end is connected to the second fixture when a second angle different from the first angle is between the first portion and the second portion.

2. The mechanical structure of Claim 1, wherein the first connector further comprises a first link and a second link, a first end of the first link connected to the first portion, a second end of the first link connected to the second link, a first end of the second link connected to the first link, and a second end of the second link opposite to the first end of the second link.

3. The mechanical structure of Claim 1, wherein the first connector comprises an operative portion, the operative portion controls the first connector to be fixated or unfixed from one of the first fixture and the second fixture.

4. The mechanical structure of Claim 3, wherein the first connector comprises a clip to fixate the first connector to one of the first fixture and the second fixture.

5. The mechanical structure of Claim 4, wherein the operative portion comprises a first lever and a second lever, wherein a first leverage angle is between the first lever and the second lever when the first connector is fixated to one of the first fixture and the second fixture, a second leverage angle different from the first leverage angle is between the first lever and the second lever when the clip is opened.

6. The mechanical structure of Claim 1, wherein the second portion have a hollowed chamber, wherein the hollowed chamber accommodates at least a portion of the first fixture.

7. The mechanical structure of Claim 1, further comprising a second connector connected between the first portion and the second portion, wherein the second connector faces away from the first connector.

8. A mechanical structure, comprising:
a first portion;
a second portion connected to the first portion; and
a first connector connected to the first portion, the first connector comprising:
a first lever;
a second lever, wherein the first lever and the second lever are connected by an elastic member; and
a clip connected to the second lever.

9. The mechanical structure of Claim 8, wherein the second portion comprises a first fixture and a second fixture above the first fixture.

10. The mechanical structure of Claim 9, wherein a first leverage angle different from the first leverage angle is between the first lever and the second lever when the first connector is fixated to one of the first fixture and the second fixture, a second leverage angle is between the first lever and the second lever when the clip is disconnected from the first fixture and the second fixture.

11. The mechanical structure of Claim 8, wherein the first lever is fixed on the first connector.

12. The mechanical structure of Claim 8, further comprising a hinge connected the first portion and the second portion, wherein the hinge allows the first portion and the second portion to rotate around a rotational axis.

13. The mechanical structure of Claim 12, wherein at least one of the first portion and the second portion has a hollowed chamber, the hinge is fixated to an inner surface of the hollowed chamber.

14. A mechanical structure, comprising:
a first portion having a first hollowed chamber;
a hinge connected to the first portion;
a second portion connected to the hinge, wherein the second portion has a second hollowed portion;
a first connector having a first end connected to the first portion and a second end connected to the second portion;
a second connector having a first end connected to the first portion and a second end connected to the second portion;
a first fixing member to fixate the hinge to an inner surface of the first hollowed chamber; and
a second fixing member to fixate the hinge to an inner surface of the second hollowed chamber.

15. The mechanical structure of Claim 14, further comprising:
a strip disposed on an outer surface of the first portion; and
a recess to accommodate the strip, wherein the recess extends along the first portion.
